# EUROPEAN PATENT APPLICATION

(11) **EP 2 945 115 A1**
(43) Date of publication of application: **18.11.2015**
(21) Application number: 15167532.9
(22) Date of filing: 13.05.2015
(51) Int. Cl.: G06Q 30/06

(54) **ELECTRONIC SHELF LABEL SYSTEM, ELECTRONIC SHELF LABEL TAG, METHOD OF RECOGNIZING DISPLAY DEVICE INFORMATION THEREOF**

(30) Priority: 16.05.2014 KR 20140058913; 02.03.2015 KR 20150028971
(71) Applicant: Samsung Electro-Mechanics Co., Ltd., Gyeonggi-do (KR)
(72) Inventor: BYUN, Gi Young, Gyeonggi-do (KR)
(74) Representative: Grünecker Patent- und Rechtsanwälte PartG mbB

(57) **Abstract**

An electronic shelf label tag includes a display configured to store display device information and to display first display information generated based on the display device information, and a circuit configured to receive the display device information from the display, to transmit the received display device information to an electronic shelf label gateway, and to provide the first display information to the display.

## Description

### CROSS-REFERENCE TO RELATED APPLICATIONS

This application claims the benefit under 35 USC 119(a) of Korean Patent Application Nos. 10-2014-0058913 filed on May 16, 2014 and 10-2015-0028971 filed on March 2, 2015, in the Korean Intellectual Property Office, the entire disclosures of which are incorporated by reference for all purposes.

### BACKGROUND

### 1. Field

The following description relates to an electronic shelf label system, an electronic shelf label tag, and a method of recognizing display device information thereof.

### 2. Description of Related Art

Electronic shelf label (ESL) systems are used in large stores, department stores, or other locations to display product information. For example, in retail setting, product information such as price information, bar codes, expiration date, and the like may be displayed on electronic shelf label tags along with products. An electronic shelf label system may also include an electronic shelf label server and electronic shelf label gateways as well as a plurality of electronic shelf label tags. The electronic shelf label tags may be connected to the electronic shelf label gateways by a wireless network.

The plurality of electronic shelf label tags may be implemented by electronic tags including display screens having various sizes. The electronic shelf label tags may, for example, come in sizes of 1.x", 2.x", 3.x", 4.x" and the like. A 1.x" screen has a diagonal length equal to or greater than 1.0" and less than 2.0". Since displayed information should be changed depending on display device information such as, for example, a screen resolution, a display type, and the like, the electronic shelf label server needs to obtain the display device information of the plurality of electronic shelf label tags.

An information display system, an information display apparatus, and an information display method are disclosed in Japanese Patent Laid-Open Publication No. 2009-282334, published on December 3, 2009.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, an electronic shelf label tag includes a display configured to store display device information and to display first display information generated based on the display device information, and a circuit configured to receive the display device information from the display, to transmit the received display device information to an electronic shelf label gateway, and to provide the first display information to the display.

The display may include a display screen configured to display the first display information, and a driver configured to store the display device information regarding the display screen and to drive the display screen to display the first display information.

The circuit may be configured to receive the display device information stored in the display through a wired connection in response to power being applied to the display or a request for the display device information being received by the display.

The display may be configured to transmit the display device information to the circuit in response to a request for the display device information being received from the circuit.

The circuit may be configured to obtain the display device information stored in the display during booting of the electronic shelf label tag.

The circuit may include a modem configured to communicate with the electronic shelf label gateway, and a processor configured to transmit the display device information to the electronic shelf label gateway via the modem, to process the display information received via the modem, and to allow the processed display information to be displayed on a display screen of the display.

The processor may be configured to store the display device information in an internal memory of the processor and to transmit the stored display device information to the electronic shelf label gateway via the modem.

The circuit may be configured to receive the first display information from the electronic shelf label gateway.

The circuit may be configured to receive second display information generated based on preset display device information from the electronic shelf label gateway and to convert the second display information into the first display information.

The circuit may be configured to transmit the display device information to the electronic shelf label gateway at the time of initiating communications with the electronic shelf label gateway after the electronic shelf label tag is booted.

The circuit may be configured to transmit identification information and the display device information of the electronic shelf label tag to the electronic shelf label gateway.

The circuit may be configured to transmit the display device information to the electronic shelf label gateway in response to the circuit receiving a request for the display device information from the electronic shelf label gateway after the electronic shelf label tag is booted.

The display device information may include at least one of display resolution information based on a size of a display screen and display type information based on whether or not the display screen is a color display screen.

In another general aspect, an electronic shelf label tag includes a display configured to display first display information generated based on display device information, and a circuit configured to store the display device information, to transmit the display device information to an electronic shelf label gateway, and to provide the first display information to the display.

The display may include a display screen configured to display the first display information, and a driver configured to drive the display screen to display the first display information.

The circuit may include a modem configured to communicate with the electronic shelf label gateway, and a processor configured to store the display device information, to transmit the display device information to the electronic shelf label gateway via the modem, to process display information received via the modem, and to provide the processed display information to be displayed on a display screen of the display.

The circuit may be configured to receive the first display information from the electronic shelf label gateway.

The circuit may be configured to receive second display information generated based on preset display device information from the electronic shelf label gateway and to convert the second display information into the first display information.

The circuit may be configured to transmit the display device information to the electronic shelf label gateway at the time of initiating communications with the electronic shelf label gateway after the electronic shelf label tag is booted.

The circuit may be configured to transmit identification information of the electronic shelf label tag and the display device information to the electronic shelf label gateway.

The display device information may include at least one of display resolution information based on a size of a display screen and display type information based on whether or not the display screen is a color display screen.

In another general aspect, an electronic shelf label system includes electronic shelf label tags configured to store display device information and to display first display information generated based on the display device information, an electronic shelf label gateway configured to receive respective display device information from the electronic shelf label tags and to transmit the received display device information, and an electronic shelf label server configured to receive the display device information of the electronic shelf label tags from the electronic shelf label gateway and to transmit the first display information or second display information generated based on preset display device information to the electronic shelf label gateway.

The electronic shelf label server may be configured to generate the first display information or the second display information through an application and to transmit the first display information or the second display information to the electronic shelf label gateway.

The electronic shelf label server may be configured to generate the second display information through an application, to convert the second display information into the first display information, and to transmit the converted first display information to the electronic shelf label gateway.

The electronic shelf label gateway may be configured to receive the first display information from the electronic shelf label server and to transmit the first display information to the electronic shelf label tags.

The electronic shelf label gateway may be configured to receive the second display information from the electronic shelf label server and to transmit the second display information to the electronic shelf label tags or to convert the second display information into the first display information and to transmit the converted first display information to the electronic shelf label tags.

The electronic shelf label tags may be configured to transmit the display device information to the electronic shelf label gateway at the time of initiating communications with the electronic shelf label gateway after being booted.

The electronic shelf label tags may be configured to transmit identification information and the display device information to the electronic shelf label gateway.

The electronic shelf label tags may be configured to receive the first display information from the electronic shelf label gateway and to display the first display information.

The electronic shelf label tags may be configured to receive the second display information from the electronic shelf label gateway, to convert the second display information into the first display information, and to display the converted first display information.

The display device information may include at least one of display resolution information based on a size of a display screen and display type information based on whether or not the display screen is a color display screen.

In another general aspect, a method of transmitting display device information of an electronic shelf label tag that comprises a display unit and a circuit involves transmitting, by the circuit, a display status check signal to the display, transmitting, by the display, a predetermined signal to the circuit and activating a status of the display, and transmitting, by the display, the display device information stored in a memory to the circuit.

The general aspect of the method may further involve transmitting, by the circuit, the display device information to an electronic shelf label server.

The general aspect of the method may further involve storing, by the circuit, the display device information in a memory.

The general aspect of the method may further involve transmitting, by the circuit, the display device information and identification information to an electronic shelf label gateway when communications between the electronic shelf label tag and the electronic shelf label gateway is sensed.

The display device information may include at least one of display resolution information based on a size of a display screen and display type information based on whether or not the display screen is a color display screen.

In another general aspect, a non-transitory computer readable medium stores therein instructions that, when executed by a processor, causes a computer to perform the above method of transmitting display device information of an electronic shelf label tag.

In another general aspect, a display information generating method of an electronic shelf label server involves receiving, at a processor, a display device information stored in an electronic shelf label tag via a gateway, generating, at the processor, a display information for the electronic shelf label tag based on the received display device information, and sending the generated display information to the gateway.

The receiving of the display device information may occur in response to a booting or an initialization of the electronic shelf label tag.

In another general aspect, a non-transitory computer readable medium stores therein instructions that, when executed by the processor, causes a computer to perform the above display information generating method of an electronic shelf label server.

Other features and aspects will be apparent from the following detailed description, the drawings, and the claims.

### BRIEF DESCRIPTION OF DRAWINGS

FIG. 1 is a view illustrating a process of installing an electronic shelf label tag.
FIG. 2 is a structural diagram illustrating a configuration of an example of an electronic shelf label system according to the present disclosure.
FIG. 3 is a block diagram of an example of an electronic shelf label tag.
FIGS. 4 and 5 are schematic diagrams illustrating examples of methods of providing display device information stored in a display of the electronic shelf label tag to a circuit.
FIG. 6 is a block diagram illustrating an example of an internal operation of a driver of the electronic shelf label tag.
FIG. 7 is a view illustrating an example of a method of recognizing display device information of the electronic shelf label tag.
FIG. 8 is a flow chart illustrating an example of a method of recognizing display device information.
FIG. 9 is a diagram illustrating an example of implementation in which a display resolution is automatically recognized.
FIG. 10 is a diagram illustrating an example of a process of generating and providing contents appropriate for display resolution information by an application.
FIG. 11 is a diagram illustrating an example of a process of converting contents to be appropriate for display resolution information and providing the converted contents by a display resolution converting module mounted in an electronic shelf label server.
FIG. 12 is a diagram illustrating an example of a process of converting contents to be appropriate for display resolution information and displaying the converted contents by the electronic shelf label tag.
FIG. 13 is a block diagram of an example of an electronic shelf label server connected to electronic shelf label gateways.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or methods described herein will be apparent to one of ordinary skill in the art. For example, the sequences of operations described herein are merely examples, and are not limited to those set forth herein, but may be changed as will be apparent to one of ordinary skill in the art, with the exception of operations necessarily occurring in a certain order. Also, descriptions of functions and constructions that are well known to one of ordinary skill in the art may be omitted for increased clarity and conciseness.

Throughout the drawings and the detailed description, the same reference numerals refer to the same elements. The drawings may not be to scale, and the relative size, proportions, and depiction of elements in the drawings may be exaggerated for clarity, illustration, and convenience.

The features described herein may be embodied in different forms, and are not to be construed as being limited to the examples described herein. Rather, the examples described herein have been provided so that this disclosure will be thorough and complete, and will convey the full scope of the disclosure to one of ordinary skill in the art.

A process of installing an electronic shelf label tag according to a related art will be described before an electronic shelf label system, an electronic shelf label tag, and a method of recognizing display device information thereof according to an embodiment of the present disclosure is described.

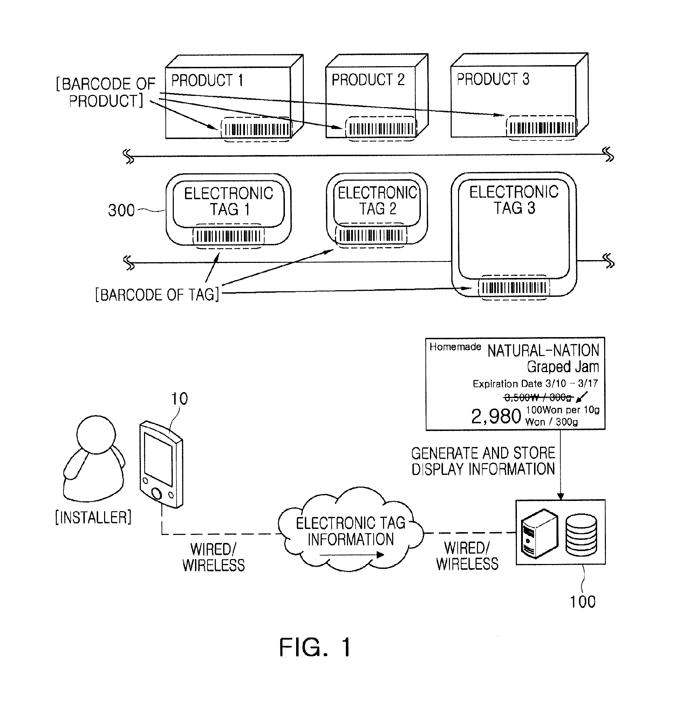

FIG. 1 illustrates a process of installing an electronic shelf label tag according to a related art.

Referring to FIG. 1, in order to install a plurality of electronic shelf label tags in a store, an installer alternatively reads the barcodes of each products and the barcodes of each electronic shelf label tags 300 (for example, electronic tags) using a portable terminal 10 to match the products and the electronic shelf tags to each other one by one. The portable terminal 10 may be, for example, a personal digital assistant (PDA) or other portable device configured to read the barcodes. Further, the installer manually inputs the display resolution information of each electronic shelf label tags 300 via an application, or the like, run by a processor in the portable terminal 10.

Then, the installer transmits information collected through the above-mentioned process, including the matching information between the products and the electronic shelf label tags and the display resolution information, to the electronic shelf label server 100 through a wired communication or a wireless communication.

The electronic shelf label server 100 stores the received information in a database and generates display information by an application, such as a layout design program, or the like, running on a processor of the electronic shelf label server 100 based on the stored information. The electronic shelf label server 100 then provides the generated display information to the electronic shelf label tags 300.

As described above, in the related art, a process of recognizing display device information of the electronic shelf label tags 300 is manually performed. Accordingly, a significant amount of time and effort is required to install the electronic shelf label tags. Further, erroneous information may be provided by the installer, increasing the possibility that errors may occur in the system.

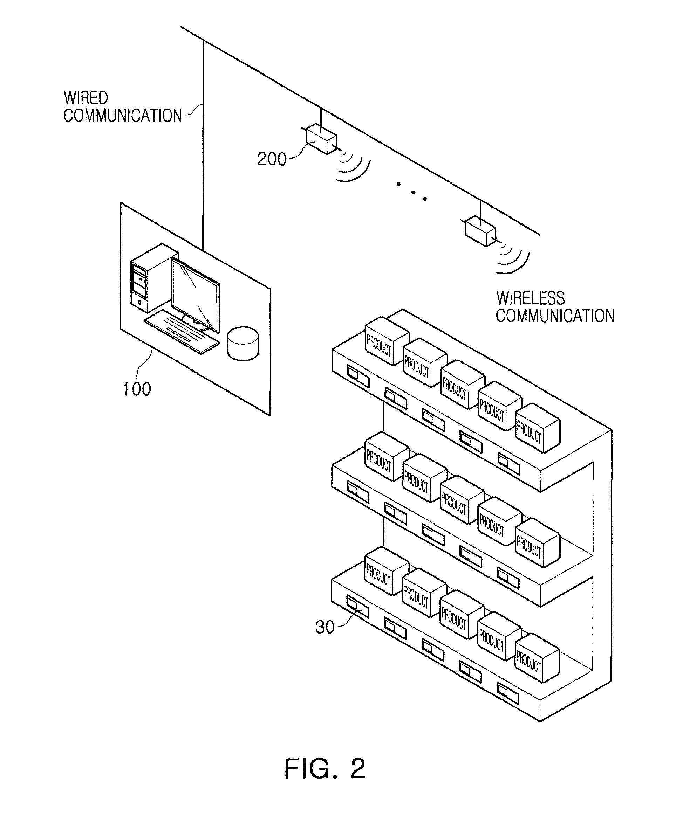

FIG. 2 illustrates an example of an electronic shelf label system according to the present disclosure.

Referring to FIG. 2, the electronic shelf label system includes an electronic shelf label server 100 (for example, an ESL server), a plurality of electronic shelf label gateways 200 (for example, gateways), and a plurality of electronic shelf label tags 300 (for example, electronic tags).

In this example, the electronic shelf label server 100 receives display device information of the plurality of electronic shelf label tags 300 from the plurality of electronic shelf label gateways 200 through a wired communications network. For example, an Ethernet connection may be used to receive the display device information. The display device information includes, for example, display resolution information, display type information such as whether a display is a color display or a monochrome display, and the like.

The electronic shelf label server 100 stores the received display device information of the plurality of electronic shelf label tags 300 in a storage apparatus such as, for example, a database, a filing system, or the like stored in a memory.

In addition, the electronic shelf label server 100 transmits display information including product information such as price information, discount information, and the like, to the plurality of electronic shelf label gateways 200 through the wired communications network.

In this example, the electronic shelf label server 100 generates display information (for example, contents) appropriate for the display resolution information of the respective electronic shelf label tags 300, based on the display resolution information of the plurality of electronic shelf label tags 300 stored in the storage apparatus, and transmits the generated display information. However, this example is provided as an illustrative purpose only, and those skilled in the art are aware of obvious variations to the interaction between the electronic shelf label server 100 and the electronic shelf label tags 300. Such variations are within the scope of the present disclosure.

For example, in another embodiment of the present disclosure, the electronic shelf label server 100 generates display information that is appropriate for preset display resolution information, such as standard contents, and converts the standard contents to be appropriate for the display resolution of the respective electronic shelf label tags 300. Then, the electronic shelf label server 100 transmits the converted contents, or transmits the standard contents regardless of the display resolution of the electronic shelf label tags 300.

The electronic shelf label server 100 may utilize a separate application, such as a layout design program run on its processor, in order to generate the display information.

The plurality of respective electronic shelf label gateways 200 may relay information transmitted and received between the electronic shelf label server 100 and the plurality of electronic shelf label tags 300. To this end, the plurality of electronic shelf label gateways 200 may respectively perform wired communications with the electronic shelf label server 100, and perform wireless communications with the plurality of electronic shelf label tags 300. For example, the plurality of electronic shelf label gateways 200 may perform the wired communications with the electronic shelf label server 100 via an Ethernet, and may perform the wireless communications with the plurality of electronic shelf label tags 300 via Zigbee^{®}.

The plurality of respective electronic shelf label gateways 200 may, for example, transmit the display device information received from the plurality of electronic shelf label tags 300 to the electronic shelf label server 100, and may transmit the display information received from the electronic shelf label server 100 to the plurality of electronic shelf label tags 300.

According to one example of the present disclosure, the electronic shelf label gateways 200 respectively receive the display information appropriate for the display resolution information of the respective electronic shelf label tags 300, such as the contents to be displayed, from the electronic shelf label server 100. The electronic shelf label gateways 200 then transmit the display information to corresponding electronic shelf label tags 300.

In another example, the electronic shelf label gateways 200 receives the display information (for example, the standard contents) appropriate for the preset display resolution information from the electronic shelf label server 100. The electronic shelf label gateways 200 then transmit the standard contents to the plurality of electronic shelf label tags 300 or convert the standard contents to be appropriate for the display resolution of the respective electronic shelf label tags 300 and transmit the converted contents to the corresponding electronic shelf label tags 300.

The plurality of electronic shelf label tags 300 may automatically recognize the display device information and transmit the display device information to the electronic shelf label gateways 200. For example, the electronic shelf label tags 300 may respectively, automatically recognize the display device information at the time of being booted, and transmit the display device information to the electronic shelf label gateways 200 at the time of initiating communications with the electronic shelf label gateways 200 or in response to a request from the electronic shelf label gateways 200 being received.

The electronic shelf label tags 300 may respectively display the display information received from the electronic shelf label gateways 200.

According to one example, the electronic shelf label tags 300 each individually receive display information appropriate for display resolution thereof from the electronic shelf label gateways 200. The electronic shelf label tags 300 then respectively display the received display information as is, without additional format conversion.

According to another example, the electronic shelf label tags 300 respectively receives display information that is appropriate for the preset display resolution information, such as standard contents, from the electronic shelf label gateways 200. The electronic shelf label tags 300 then respectively convert the received standard contents to be appropriate for display resolution thereof and display the converted contents.

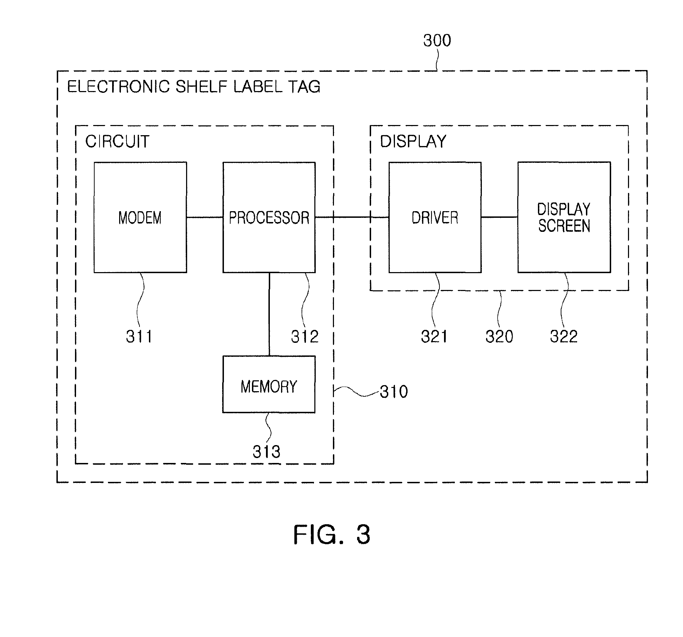

A detailed configuration of the electronic shelf label tag 300 and a method of automatically recognizing display device information by the electronic shelf label tag 300 will be described further with reference to FIGS. 3 through 7.

FIG. 3 illustrates an example of an electronic shelf label tag according to the present disclosure.

Referring to FIG. 3, as main components of the electronic shelf label tag 300 according to the example, a circuit 310 and a display 320 are included therein.

The circuit 310 is configured to perform data processing and communications for operations of the electronic shelf label tag 300, and includes a modem 311 and a processor 312. For instance, the circuit 310 may be implemented by a printed circuit board (PCB) assembly, or the like. The circuit 310 may further include a memory 313, as needed.

The modem 311 is configured to perform communications with the plurality of electronic shelf label gateways 200, and may be implemented by, for example, a radio frequency (RF) modem for wireless communications, or the like.

The processor 312 processes display information received via the modem 311 and allows the processed display information to be displayed on a display screen of the display 320. In addition, the processor 312 transmits display device information transferred from the display 320 to the electronic shelf label gateways 200 via the modem 311. The processor 312 may also store the display device information transferred from the display 320 in the memory 313 additionally included in the circuit 310 and then transmit the display device information to the electronic shelf label gateways 200, as needed.

The display 320 is configured to display the display information received through the circuit 310, and includes a driver 321 and a display screen 322.

The driver 321 may serve to drive the display screen 322 to display the display information and may be implemented by, for example, a display integrated circuit (IC) including a memory such as a display random access memory (RAM), a register, or the like. Display device information to be described below may be stored in a memory included in the driver 321.

In this example, the display screen 322 refers to a region of an electronic shelf label tag 300 in which the display information is displayed. For example, the display screen may be an LCD screen or an LED screen. Display resolution information may be determined depending on a size of the display screen 322, and may include a horizontal resolution corresponding to a horizontal length of the display screen 322 and a vertical resolution corresponding to a vertical height of the display screen 322.

The following Table 1 illustrates examples of display resolution information depending on a diagonal length of the display screen 322.

**[Table 1]**

| | | | | |
|---|---|---|---|---|
| Diagonal Length | 1.54" | 2.2" | 2.9" | 4.2" |
| Resolution | 200 x 200 | 172x72 | 296 x 128 | 400x300 |

In addition, display type information may be determined depending on whether or not the display screen 322 is a color display screen. For example, the display type information may indicate whether the display screen 322 is a monochrome display screen or a color (3-color) display screen, or the like.

Although an example in which the display device information is stored in the driver 321 of the display 320 has been described above, a location in which the display device information is stored is not limited thereto. For example, the display device information may also be stored in the processor 312 of the circuit 310.

In addition, the circuit 310 and the display 320 described above may be implemented to be coupled to or separated from each other, using an interface pin, or the like, in terms of hardware. In this example, the circuit 310 of the electronic shelf label tag 300 may be coupled to the display 320 having various display resolutions or types to configure an integral electronic shelf label tag 300.

The following Table 2 illustrates an example of an interface between the circuit 310 and the display 320, for example, the processor 312 of the circuit 310 and the driver 321 of the display 320.

**[Table 2]**

| Pin No. | Type | Name | Description |
|---|---|---|---|
| Pin No. 1 | O | BUSY | Output Pin In Busy Status |
| Pin No. 2 | I | RES# | Reset |
| Pin No. 3 | I | D/C# | Data/Command Control Pin |
| Pin No. 4 | I | CS# | Chip Selection Input Pin |
| Pin No. 5 | I/O | D0 | Serial Clock Pin (SPI) |
| Pin No. 6 | I/O | D1 | Serial Data Pin (SPI) |

According to one example, Pin No. 1, a busy signal transferred from the display 320 to the circuit 310, may be a signal for requesting an additional data input to be prohibited since the display 320 is performing any operation.

Pin No. 2, a reset signal transferred from the circuit 310 to the display 320, may be a command for resetting a status of the driver 321.

Pin No. 3, a control signal transferred from the circuit 310 to the display 320, may be a signal for distinguishing whether a transmitted signal is data or a command signal.

Pin No. 4, a control signal transferred from the circuit 310 to the display 320, may be a signal for determining a sequence of serial peripheral interface (SPI) communications at the time of a cascade connection.

Pin No. 5 may be a clock connection pin of serial clock communications between the circuit 310 and the display 320.

Pin No. 6 may be a data connection pin of serial clock communications between the circuit 310 and the display 320.

The interface illustrated in Table 2 is provided as an example, and the arrangements of signals may be modified in various ways.

In addition, the driver 321 may be coupled to the processor 312 to transmit the display device information through serial/parallel communications, SPI communications, or the like, as described below.

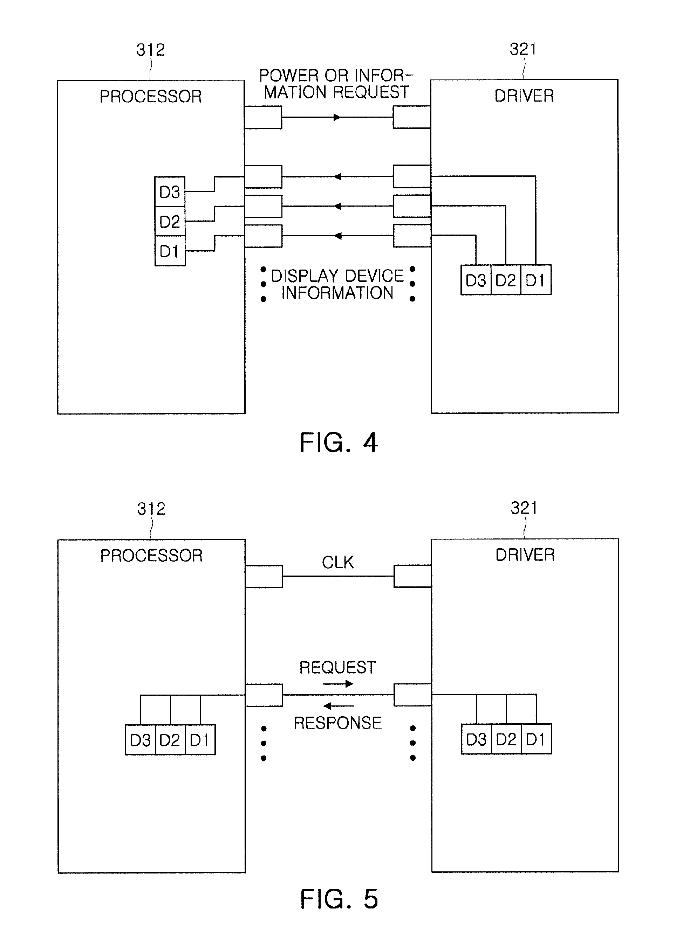

FIG. 4 illustrates an example of a scheme of providing display device information stored in a display of the electronic shelf label tag to a circuit.

As described above, the driver 321 included in the display 320 of the electronic shelf label tag 300 may include a memory in which the display device information is stored.

As illustrated in FIG. 4, when the processor 312 applies power to the driver 321 or requests the driver 321 to transmit the display device information, the display device information stored in the memory included in the driver 321 may be transmitted to the processor 312 in a hardwired mapping scheme. To this end, additional interface pins may be required.

FIG. 4 illustrates an example in which the display device information is configured of three bits of D3, D2, and D1. In this example, a total of eight pieces of display device information are provided. Bits configuring the display device information may be changed, as needed.

In addition, a communications scheme between the driver 321 and the processor 312 may be implemented by serial communications, parallel communications, or the like.

The hard wired mapping scheme illustrated in FIG. 4 may have positive attributes such as a rapid speed, convenience, and a simple communications procedure.

FIG. 5 illustrates a scheme of providing display device information stored in a display of the electronic shelf label tag to a circuit.

As illustrated in FIG. 5, the processor 312 may request that the driver 321 transmit the display device information, as needed, and the driver 321 may transmit the display device information to the processor 312 in response to this request, in a request and response scheme.

Here, a communications connection between the driver 321 and the processor 312 may be implemented by, for example, data buses, SPI buses, or the like.

The request and response scheme illustrated in FIG. 5 allows communications to be carried out using an existing communications connection without using a separate pin or an additional apparatus.

The schemes of providing the display device information illustrated in FIGS. 4 and 5 are provided only as illustrative examples, and other schemes for providing the display device information would have been obvious to those skilled in the art and within the scope of the present disclosure. For example, any type of memory or communications scheme known in the art may be used in order to transfer the display device information stored in the driver 321 to the processor 312.

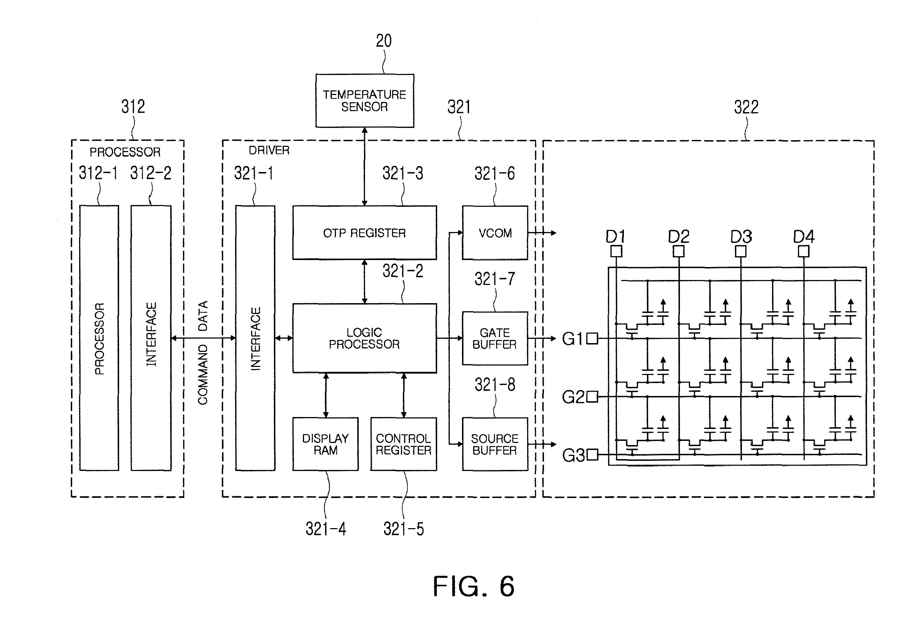

FIG. 6 illustrates an example of an internal operation of a driver of an electronic shelf label tag according to the present disclosure.

Referring to FIG. 6, first, a processor 312-1 may prepare a command and a data for the driver 321 and transfer the command and the data to the driver 321 through an interface 312-2.

In this example, a parallel communications scheme or a serial communications scheme such as SPI may be used to implement the data communications between interfaces 312-2 and 321-1 of the processor 312 and the driver 321. However, the communications scheme is not limited thereto.

A logic processor 321-2 of the driver 321 may confirm a display preparing status depending on a control command transferred thereto.

According to one example, when the display screen 322 is implemented by an electrophoretic display (EPD), since the EPD is sensitive to the temperature of its environment, a temperature sensor 20 is installed outside or inside the display screen 322.

After a value of the temperature sensor 20 is confirmed, a display waveform appropriate for a temperature detected by the temperature sensor 20 may be selected based on a value pre-stored in, for example, a one time programming (OTP) register 321-3.

In addition, a display random access memory (RAM) 321-4 may be utilized to process the display information, as needed. For example, an operation such as an operation of comparing existing display information with new display information, or the like, may be performed in a state in which the existing display information is stored in the display RAM 321-4.

In order to display the display information on the display screen 322, a digital signal (for example, 3V) is boosted to be appropriate for medium driving characteristics and is then be transferred to respective pixels. To this end, the digital signal may be boosted respectively in a gate buffer 321-7 and a source buffer 321-8 and be then transferred to respective pixels. In addition, a VCOM 321-6 may apply a common electrode voltage.

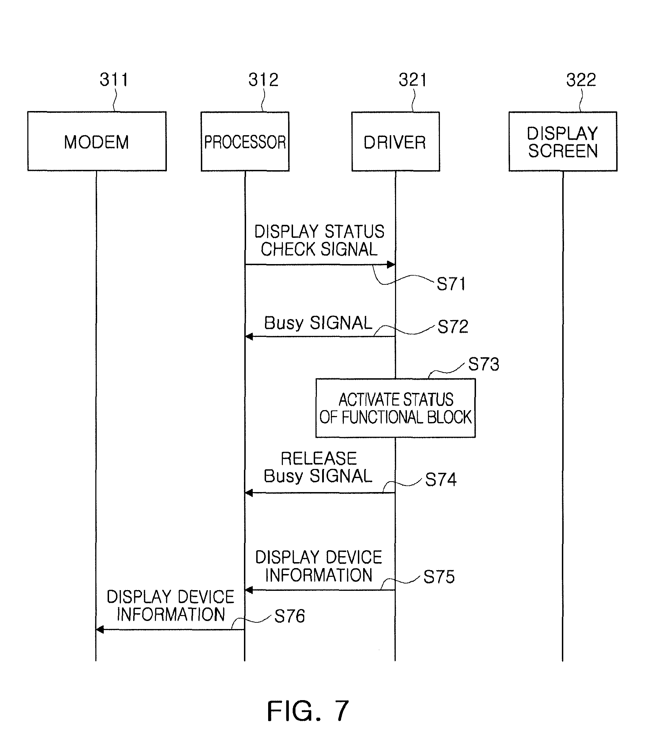

FIG. 7 illustrates an example of a method of automatically recognizing display device information of the electronic shelf label tag.

Referring to FIG. 7, when the electronic shelf label tag is booted by power applied thereto, the processor 312 transmits a signal for confirming a status of the display 320 to the driver 321 in S71. In this example, the signal for confirming a status of the display 320 transmitted in S71 is referred to as a display status check signal. Further, in this example, the concept of the booting of the electronic shelf label tag includes a case in which the electronic shelf label tag is initialized. For example, the resetting of an electronic shelf label tag by hardware or software may be considered as a booting event of the electronic shelf label tag.

Then, the driver 321 transmits a predetermined signal, such as a busy signal, to the processor 312 in S72. By this process, the driver 321 secures a time during which it may confirm its status.

In addition, in S73, the driver 321 activates statuses of respective functional blocks such as a gate driver, a source driver, and the like, to prepare for the reception of the display information.

Then, in S74, the driver 321 releases the predetermined signal such as, for example, the busy signal, to notify the processor 312 that the preparation has been completed.

Then, in S75, the driver 321 transfers the display device information stored in the memory to the processor 312.

In S76, the processor 312 transmits the received display device information to an electronic shelf label gateway via the modem 311 at the time of initiating communications with the electronic shelf label gateway. For example, at the time of initiating communications with the electronic shelf label gateway, when communications between the electronic shelf label tag and the electronic shelf label gateway is detected and a request is provided to establish a communications channel, the processor 312 may transmit the display device information transferred from the driver 321 together with identification information thereof to the electronic shelf label gateway in response to the request. For example, the communications between the electronic shelf label tag and the electronic shelf label gateway may be detected by detecting an association request frame. The identification information transmitted by the processor 312 may include media access control (MAC) information.

Meanwhile, in the event that the processor 312 receives a request for the display device information from the electronic shelf label gateway after initiating the communications with the electronic shelf label gateway, the processor 312 may also transmit the display device information to the electronic shelf label gateway via the modem 311 in S76.

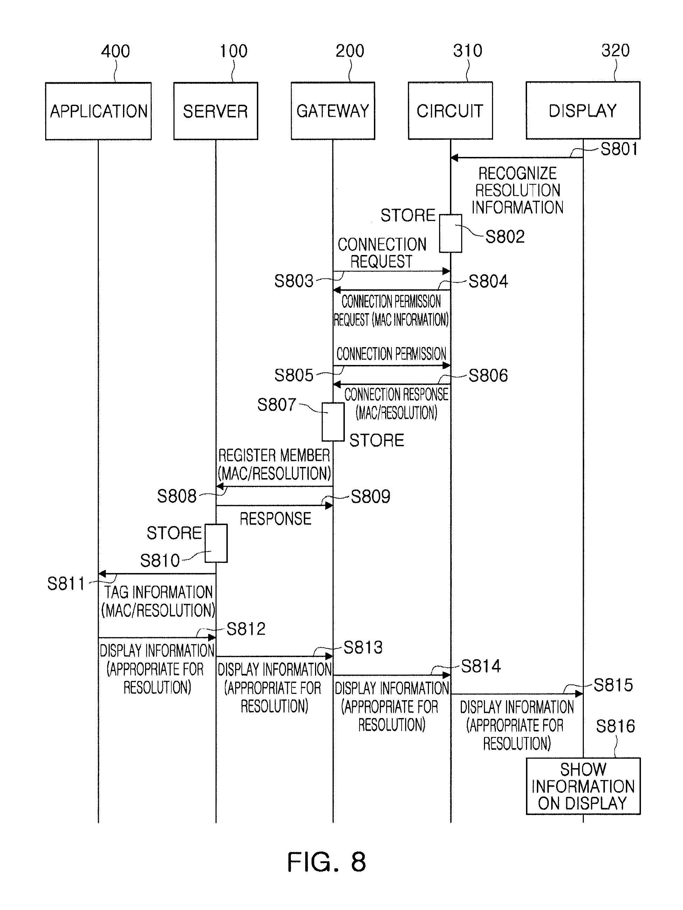

FIG. 8 illustrates a flow chart of a method of recognizing display device information according to one example of the present disclosure.

Referring to FIG. 8, in S801, the circuit 310 of the electronic shelf label tag 300 first automatically recognizes the display device information of the display 320. For example, the display device information may include display resolution information or the like. Since a process of automatically recognizing the display device information has been described with reference to FIG. 7, a repeated description thereof will be omitted. In S802, the circuit 310 stores the transferred display resolution information in an internal memory.

Then, the electronic shelf label tag 300 may transfer identification information thereof, such as MAC information), and the display resolution information to the electronic shelf label gateway 200 at the time of starting initial communications, for example, in a process in which it participates in a wireless network.

For example, in response to the electronic shelf label gateway 200 transmitting a connection request to the electronic shelf label tag 300 in S803, the electronic shelf label tag 300 transmits a connection permission request together with identification information thereof to the electronic shelf label gateway 200 in S804. In addition, in response to the electronic shelf label gateway 200 transmitting a connection permission to the electronic shelf label tag 300 in S805, the electronic shelf label tag 300 transmits a connection response together with identification information and the display resolution information thereof to the electronic shelf label gateway 200 in S806. In this example, the electronic shelf label gateway 200 also stores the received identification information and the received display resolution information of the electronic shelf label tag 300 in the internal memory in S807.

Then, the electronic shelf label gateway 200 sends a member registration request while transmitting identification information and display resolution information of members (for example, the electronic shelf label tags 300) participating in the same wireless network to the electronic shelf label server 100 in S808, and the electronic shelf label server 100 transmits a response to the member registration request to the electronic shelf label gateway 200 in S809.

Then, the electronic shelf label server 100 may combine the identification information, the display resolution information, and matched product information of the electronic shelf label tag 300 with each other and store the combined information therein in S810, and the combined information may be transmitted to and utilized in the application 400 in S811.

For example, the application 400 may be a software (for example, a layout design program) generating display information appropriate for the display resolution of the electronic shelf label tag 300 based on the combined information or converting the display information to be appropriate for the display resolution information.

As described above, the display information appropriate for the display resolution information, generated by the application 400 is transferred to the display 320 through the electronic shelf label server 100, the electronic shelf label gateway 200, and the circuit 310 of the electronic shelf label tag 300 (S812 to S815), and be then displayed on the display screen in S816.

Although an example in which the display device information is transmitted at the time of initiating the communications between the electronic shelf label tag and the electronic shelf label gateway is provided above, the present disclosure is not necessarily limited thereto.

For example, as described above, when the electronic shelf label tag receives a request for the display device information from the electronic shelf label gateway at any point in time after the initiating of the communications between the electronic shelf label tag and the electronic shelf label gateway, the electronic shelf label tag may transmit the display device information to the electronic shelf label gateway in response to the request.

In addition, although an example in which the application 400 generates the display information appropriate for the display resolution information of the electronic shelf label tag 300 is described above, the present disclosure is not limited thereto.

For instance, in another example, the application 400 may generate and transmit the display information that is appropriate for the preset display resolution information such as standard contents, and the standard contents may also be converted to be appropriate for the display resolution information of the electronic shelf label tag 300 in any one of respective processes occurring in, for example, the electronic shelf label server 100, the electronic shelf label gateway 200, and the circuit 310 of the electronic shelf label tag 300, to which the display information is transferred.

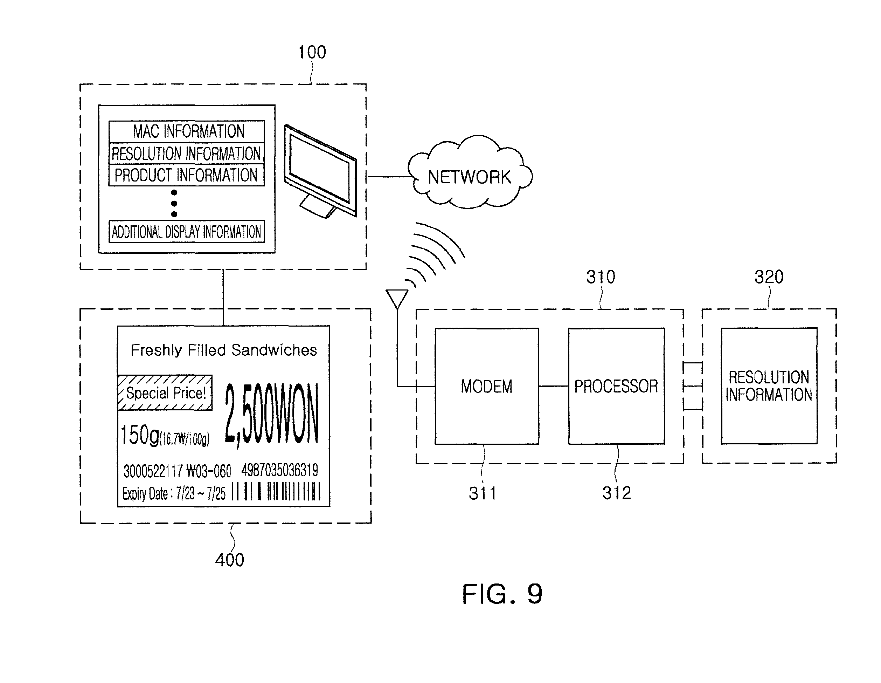

FIG. 9 illustrates an example of an implementation in which a display resolution is automatically recognized.

Referring to FIG. 9, the circuit 310 of the electronic shelf label tag 300 automatically recognizes the display resolution information stored in the display 320 and transmit the display resolution information to the electronic shelf label server 100 through the electronic shelf label gateway.

Therefore, the electronic shelf label server 100 can combine identification information (for example, MAC information), display resolution information, and matched product information of a corresponding electronic shelf label tag 300 with each other and store the combined information in a database (DB) thereof.

In addition, the application 400 that is being executed on a processor generates display information appropriate for the display resolution information of the electronic shelf label tag 300 based on the combined information stored in the DB of the electronic shelf label server 100.

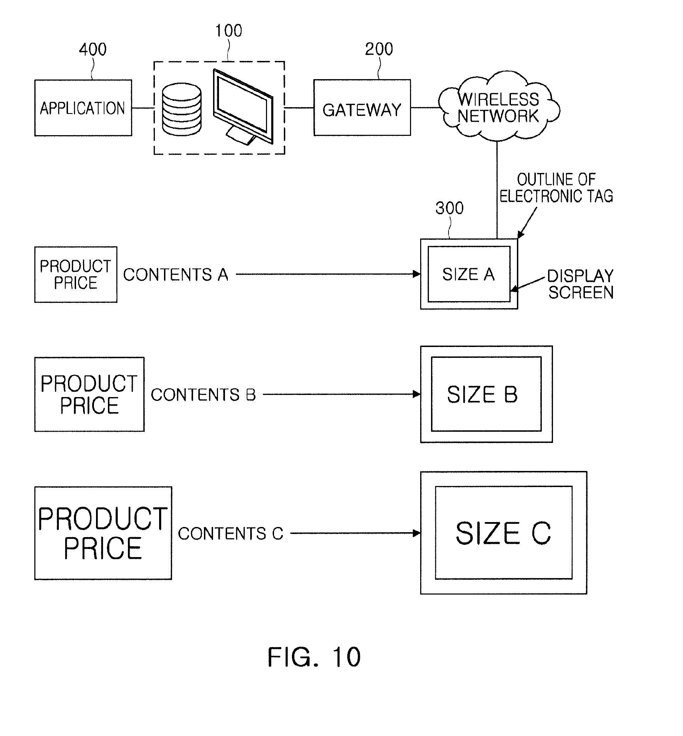

FIG. 10 illustrates an example of a method of generating and providing contents appropriate for display resolution information by an application.

Referring to FIG. 10, the application 400 generates display information appropriate for display resolution information of the respective electronic shelf label tags 300 and transfers the generated display information to the respective electronic shelf label tags 300 through the electronic shelf label server 100 and the electronic shelf label gateway 200. The electronic shelf label tags 300 then displays the received display information as it is.

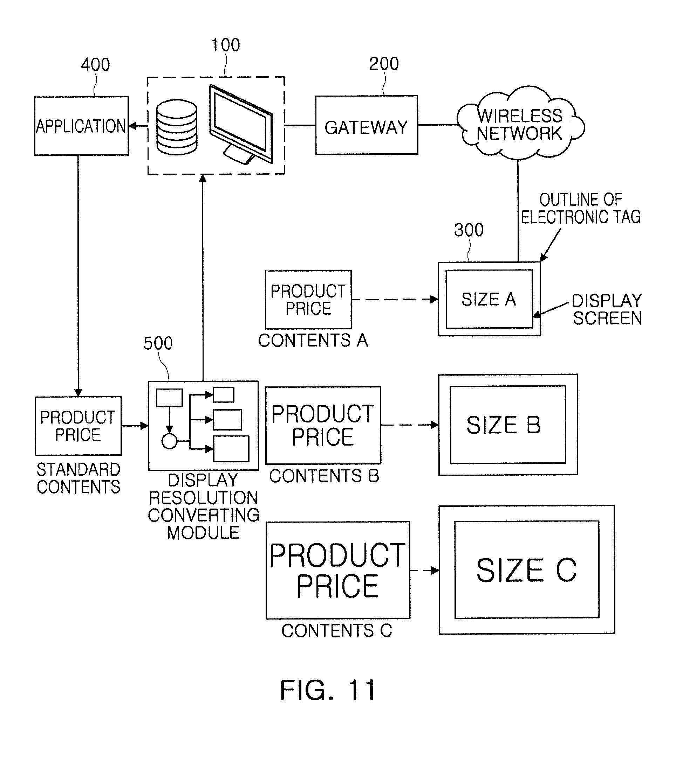

FIG. 11 illustrates an example of a process of converting contents to be appropriate for display resolution information by a display resolution converting module mounted in an electronic shelf label server and providing the converted contents.

Referring to FIG. 11, the electronic shelf label server 100 converts the standard contents generated by the application 400 to be appropriate for the display resolution information of the electronic shelf label tags 300 and transmits the converted contents to the electronic shelf label gateway 200.

To this end, the electronic shelf label server 100 further includes a display resolution converting module 500 for converting the standard contents.

The display resolution converting module 500 converts the standard contents to be appropriate for the display resolution information of the electronic shelf label tag 300 based on a comparison result between the display resolution information of the electronic shelf label tag 300 and display resolution information of the standard contents.

For example, when a display resolution of the electronic shelf label tag 300 is higher than that of the standard contents, the display resolution converting module 500 may convert the standard contents by enlarging the standard contents, processing short portions as blanks, or the like.

On the other hand, for example, when a display resolution of the electronic shelf label tag 300 is lower than that of the standard contents, the display resolution converting module 500 may convert the standard contents by reducing the standard contents, discarding contents of surplus portions, or the like.

Although an example in which the display resolution converting module 500 is included in the electronic shelf label server 100 is described with respect to FIG. 11, the present disclosure is not limited thereto. For instance, in another example, the display resolution converting module 500 may be included in the electronic shelf label gateway 200 and may perform the conversion of contents as described above in the electronic shelf label gateway 200.

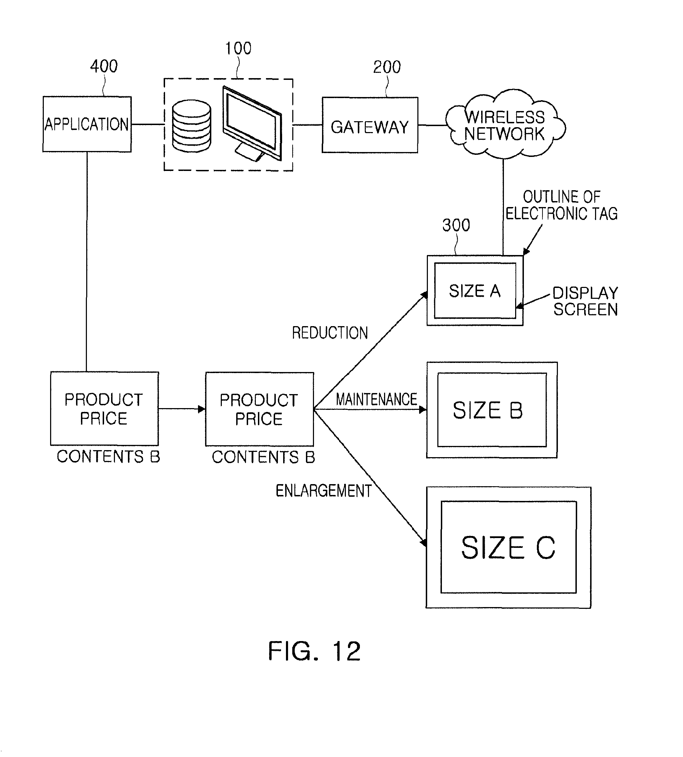

FIG. 12 illustrates an example of a method of converting contents to be appropriate for display resolution information and displaying the converted contents by the electronic shelf label tag.

Referring to FIG. 12, the electronic shelf label tags 300 receive the standard contents generated by the application 400, convert the standard contents to be appropriate for the display resolution information thereof, and display the converted contents.

To this end, the circuit 310 of the electronic shelf label tag 300 converts the standard contents to be appropriate for the display resolution information of the electronic shelf label tag 300 based on a comparison result between the display resolution information of the electronic shelf label tag 300 and display resolution information of the standard contents.

For example, when a display resolution of the electronic shelf label tag 300 is higher than that of the standard contents, the circuit 310 of the electronic shelf label tag 300 may convert the standard contents by enlarging the standard contents or processing short portions as blanks and display the converted contents.

On the other hand, for example, when a display resolution of the electronic shelf label tag 300 is lower than that of the standard contents, the circuit 310 of the electronic shelf label tag 300 may convert the standard contents by reducing the standard contents or discarding contents of surplus portions and may display the converted contents.

In addition, the circuit 310 of the electronic shelf label tag 300 may display an occurrence of an error without displaying the display information in a case in which a display resolution of the standard contents and a resolution of the electronic shelf label tag 300 are different from each other.

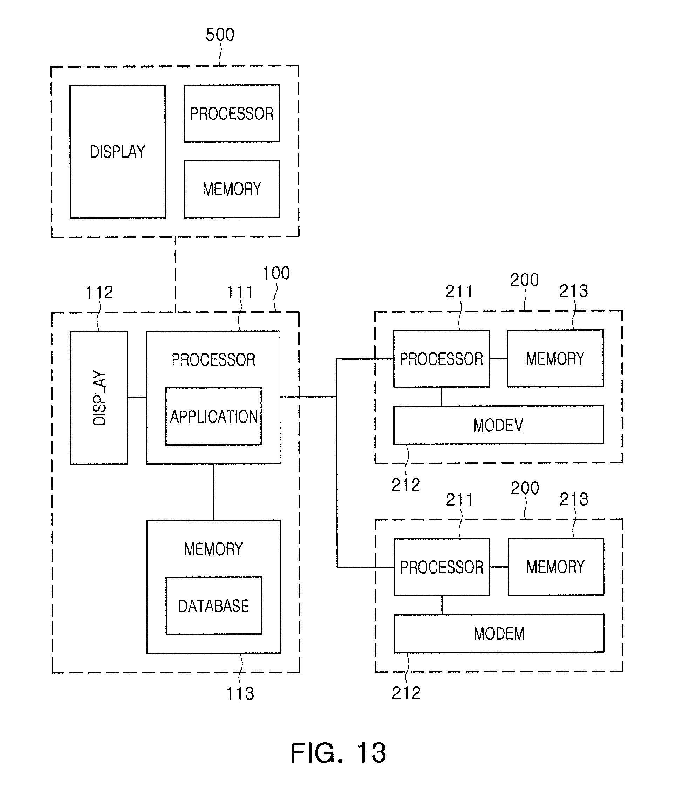

FIG. 13 illustrates an example of an electronic shelf label server that is connected to electronic shelf label gateways.

In this example, the electronic shelf label server 100 is connected to a plurality of electronic shelf label gateways 200. Further, while not illustrated, the electronic shelf label gateways 200 may each connected to a plurality of electronic shelf label tags 300. Accordingly, the electronic shelf label server 100 can control the displayed content of several electronic shelf label tags 300. The description provided with respect to FIGS. 1-12 applies to this example, and repetitive description is omitted for conciseness.

The electronic shelf label server 100 also communicates with a portable terminal 500, such as a PDA, a smart tablet, or a smart phone. The electronic shelf label server 100 includes a processor 111, a display 112, and a memory 113. The processor 111 may execute an application that, for example, generates display information appropriate for the display resolution of each electronic shelf label tags 300. The database in the memory 113 may store display device information regarding the plurality of electronic shelf label tags 300 that communicate with the electronic shelf label gateways 200. The portable terminal 500 includes a display, a processor and a memory, and may allow a user to input information regarding products associated with each electronic shelf label tags. The product information can, alternatively, be entered directly to the electronic shelf label server 100. The electronic shelf label gateways 200 include a processor 211 that processes various requests and information sent to the gateway and transmitted by the gateway, a memory 213 that stores information regarding the electronic shelf label tags 300 or server 100 associated with the gateway, and a modem 212 that allows the gateway to communicate with the electronic shelf label tags 300. The example illustrated in FIG. 13 is provided to further the understanding of the present disclosure, and the electronic shelf label server 100 and electronic shelf label gateway 300 may include additional structures not illustrated. Further, obvious variations to the illustrated structure are within the scope of the present disclosure.

As set forth above, according to embodiments of the present disclosure, display device information of an electronic shelf label tag may be automatically recognized. Therefore, a user does not need to manually input the display device information of the electronic shelf label tags at the time of installing the electronic shelf label tags. As a result, productivity of an installation work may be improved, and the possibility that an error may occur in a system due to a mistake of the user may be basically eliminated during the installation process.

In addition, according to the embodiments of the present disclosure, even in a case in which a display of an electronic shelf label tag is replaced by a heterogeneous display, the replaced heterogeneous display may be automatically recognized. Therefore, maintenance characteristics of the system may be improved.

The apparatuses, units, modules, devices, and other components illustrated in FIGS. 1-6 and 9-13 that perform the operations described herein with respect to FIGS. 7 and 8 are implemented by hardware components. Examples of hardware components include controllers, sensors, generators, drivers, and any other electronic components known to one of ordinary skill in the art. In one example, the hardware components are implemented by one or more processors or computers. A processor or computer is implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices known to one of ordinary skill in the art that is capable of responding to and executing instructions in a defined manner to achieve a desired result. In one example, a processor or computer includes, or is connected to, one or more memories storing instructions or software that are executed by the processor or computer. Hardware components implemented by a processor or computer execute instructions or software, such as an operating system (OS) and one or more software applications that run on the OS, to perform the operations described herein with respect to FIGS. 1-13. The hardware components also access, manipulate, process, create, and store data in response to execution of the instructions or software. For simplicity, the singular term "processor" or "computer" may be used in the description of the examples described herein, but in other examples multiple processors or computers are used, and a processor or computer includes multiple processing elements, or multiple types of processing elements, or both. In one example, a hardware component includes multiple processors, and in another example, a hardware component includes a processor and a controller. A hardware component has any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

Instructions or software to control a processor or computer to implement the hardware components and perform the methods as described above are written as computer programs, code segments, instructions or any combination thereof, for individually or collectively instructing or configuring the processor or computer to operate as a machine or special-purpose computer to perform the operations performed by the hardware components and the methods as described above. In on example, the instructions or software include machine code that is directly executed by the processor or computer, such as machine code produced by a compiler. In another example, the instructions or software include higher-level code that executed by the processor or computer using an interpreter. Programmers of ordinary skill in the art can readily write the instructions or software based on the block diagrams and the flow charts illustrated in the drawings and the corresponding descriptions in the specification, which disclose algorithms for performing the operations performed by the hardware components and the methods as described above.

The instructions or software to control a processor or computer to implement the hardware components and perform the methods as described above, and any associated data, data files, and data structures, are recorded, stored, or fixed in or on one or more non-transitory computer-readable storage media. Examples of a non-transitory computer-readable storage medium include read-only memory (ROM), random-access memory (RAM), flash memory, CD-ROMs, CD-Rs, CD+Rs, CD-RWs, CD+RWs, DVD-ROMs, DVD-Rs, DVD+Rs, DVD-RWs, DVD+RWs, DVD-RAMs, BD-ROMs, BD-Rs, BD-R LTHs, BD-REs, magnetic tapes, floppy disks, magneto-optical data storage devices, optical data storage devices, hard disks, solid-state disks, and any device known to one of ordinary skill in the art that is capable of storing the instructions or software and any associated data, data files, and data structures in a non-transitory manner and providing the instructions or software and any associated data, data files, and data structures to a processor or computer so that the processor or computer can execute the instructions. In one example, the instructions or software and any associated data, data files, and data structures are distributed over network-coupled computer systems so that the instructions and software and any associated data, data files, and data structures are be stored, accessed, and executed in a distributed fashion by the processor or computer.

While this disclosure includes specific examples, it will be apparent to one of ordinary skill in the art that various changes in form and details may be made in these examples without departing from the spirit and scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner and/or replaced or supplemented by other components or their equivalents. Therefore, the scope of the disclosure is defined not by the detailed description, but by the claims and their equivalents, and all variations within the scope of the claims and their equivalents are to be construed as being included in the disclosure.

## Claims

1. An electronic shelf label tag comprising:
a display configured to store display device information and to display first display information generated based on the display device information; and
a circuit configured to receive the display device information from the display, to transmit the received display device information to an electronic shelf label gateway, and to provide the first display information to the display.

2. The electronic shelf label tag of claim 1, wherein the display comprises:
a display screen configured to display the first display information; and
a driver configured to store the display device information regarding the display screen and to drive the display screen to display the first display information.

3. The electronic shelf label tag of claim 1, wherein the circuit is configured to receive the display device information stored in the display through a wired connection in response to power being applied to the display or a request for the display device information being received by the display.

4. The electronic shelf label tag of claim 1, wherein the display is configured to transmit the display device information to the circuit in response to a request for the display device information being received from the circuit.

5. The electronic shelf label tag of claim 1, wherein the circuit is configured to obtain the display device information stored in the display during booting of the electronic shelf label tag.

6. The electronic shelf label tag of claim 1, wherein the circuit comprises:
a modem configured to communicate with the electronic shelf label gateway; and
a processor configured to transmit the display device information to the electronic shelf label gateway via the modem, to process the display information received via the modem, and to allow the processed display information to be displayed on a display screen of the display.

7. The electronic shelf label tag of claim 6, wherein the processor is configured to store the display device information in an internal memory of the processor and to transmit the stored display device information to the electronic shelf label gateway via the modem.

8. The electronic shelf label tag of claim 1, wherein the circuit is configured to receive the first display information from the electronic shelf label gateway.

9. The electronic shelf label tag of claim 1, wherein the circuit is configured to receive second display information generated based on preset display device information from the electronic shelf label gateway and to convert the second display information into the first display information.

10. The electronic shelf label tag of claim 1, wherein the circuit is configured to transmit the display device information to the electronic shelf label gateway at the time of initiating communications with the electronic shelf label gateway after the electronic shelf label tag is booted.

11. The electronic shelf label tag of claim 10, wherein the circuit is configured to transmit identification information and the display device information of the electronic shelf label tag to the electronic shelf label gateway.

12. The electronic shelf label tag of claim 1, wherein the circuit is configured to transmit the display device information to the electronic shelf label gateway in response to the circuit receiving a request for the display device information from the electronic shelf label gateway after the electronic shelf label tag is booted.

13. The electronic shelf label tag of claim 1, wherein the display device information comprises at least one of display resolution information based on a size of a display screen and display type information based on whether or not the display screen is a color display screen.
